# EUROPÄISCHE PATENTSCHRIFT

(11) **EP 0 657 328 B1**
(45) Veröffentlichungstag und Bekanntmachung des Hinweises auf die Patenterteilung: **08.12.1999**
(21) Anmeldenummer: 94119464.9
(22) Anmeldetag: 09.12.1994
(51) Int. Cl.: B60R 21/13

(54) **Antriebs- und Regelmechanismus für einen geradlinig ausfahrbaren Überrollbügel**
Drive and locking mechanism for a linearly raisable roll bar
Mécanisme pour entraîner et bloquer un arceau de sécurité déployable en ligne droite

(30) Priorität: 13.12.1993 DE 4342402
(43) Veröffentlichungstag der Anmeldung: 14.06.1995
(73) Patentinhaber: ISE Innomotive Systems Europe GmbH, 51702 Bergneustadt (DE)
(72) Erfinder: Braun, Achim, D-51588 Nümbrecht (DE); Nowack, Reinhard, D-57489 Drolshagen (DE); Löwen, Jakob, D-51702 Bergneustadt (DE); Nass, Michael, D-51702 Bergneustadt (DE)
(74) Vertreter: Fuchs Mehler Weiss & Fritzsche

(56) Entgegenhaltungen:
- EP-A- 0 459 213

## Beschreibung

Die vorliegende Erfindung betrifft einen geradlinig aus fahrbaren Überrollbügel für Kraftfahrzeuge, mit Antriebs- und Riegelmechanisms ,ausgestattet mit einem von Elektromotor angetriebenen Gewindetrieb dessen Achse eine Gewindetraverse in Richtung der Ausfahrbewegung des Überrollbügels bewegt.

Eine derartige Vorrichtung ist aus der EP 0 459 213 B1 bekannt. Der bekannte Antrieb ist für den Überrollbügel eines luxuriösen Fahrzeugs vorgesehen. Der Überrollbügel soll nicht nur im Gefahrenfall herausschnellen, sondern auch zu Komfortzwecken manuell in seiner Höhe einstellbar sein. Der zugehörige Antriebs- und Riegelmechanismus ist im Bestreben nach Perfektionismus derart kompliziert mit Zahnrädern, Seilzügen, Gewindespindeln und ähnlichen Mitteln zur Kraftübertragung versehen, daß sich eine extrem teure und komplizierte Anordnung ergibt. Solche Antriebs- und Riegelmechanismen eignen sich daher nicht für Cabriolets der mittleren Preisklasse.

Die Aufgabe der vorliegenden Erfindung besteht daher darin, eine preiswerte, aber dennoch sichere Alternative zu einem derartigen Antriebs- und Riegelmechanismus für geradlinig ausfahrbare Überrollbügel zu schaffen.

Diese Aufgabe wird dadurch gelöst, daß die Gewindetraverse mittels einer einen Leerweg aufweisende Mitnehmerverbindung eine an das Bügelrohr (2) des Überrollbügels (1) fest gekoppelte Querstrebe parallel zur Gewindespindel des Gewindetriebs auf und ab bewegt und gleichzeitig den Riegelmechanismus in der ausgefahrenen Endposition des Bügelrohres des Überrollbügels sperrt und beim Einfahren des Bügelrohres den Riegelmechanismus entsperrt.

Das Prinzip der vorliegenden Erfindung besteht also darin, mit einem gemeinsamen Antrieb über eine Mitnehmerverbindung sowohl den Überrollbügel ein- und auszufahren als auch eine Sperrvorrichtung zu betätigen.

Die Merkmale nach Anspruch 2 bewirken auf einfache Weise, daß eine lineare Bewegung der Gewindetraverse eine Schwenkbewegung einer Sperrklinke zur Folge hat.

Durch die Einstellung der Spielfreiheit zwischen der am Überrollbügel befestigten Querstrebe und der Gewindetraverse wird gewährleistet, daß die Sperrklinke auf jeden Fall in ihre Sperrposition schwenken kann, ohne daß der Überrollbügel im Wege ist.

Eine besonders preiswerte Form einer Führungsschiene an der Sperrklinke bildet eine Kulissenführung mit Hilfe eines Langlochs und einer Laufrolle nach Anspruch 4.

Die Merkmale nach Anspruch 5 stellen einen ordnungsgemäßen Ablauf der einzelnen Bewegungen sicher. Dazu gehört, daß die Sperrklinke erst dann einrasten darf, wenn der Überrollbügel seine ausgefahrene Position erreicht hat. Zum anderen muß die Sperrklinke den Überrollbügel freigeben, bevor dieser sich wieder in Richtung auf seine eingefahrene Position in Bewegung setzen kann.

Weitere Erläuterungen des Erfindungsgedankens erfolgen nun anhand der Beschreibung einer Zeichnung.

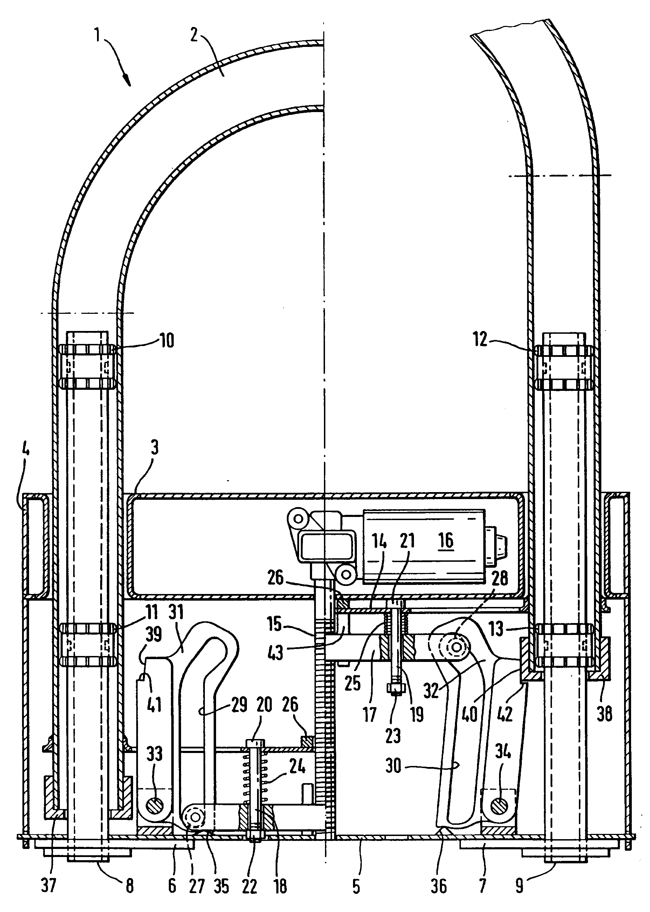

Die Figur zeigt in zweigeteilter Darstellung einen erfindungsgemäßen Antriebs- und Riegelmechanismus, wobei sich der Überrollbügel in der linken Bildhälfte in seiner eingefahrenen und in der rechten Bildhälfte in seiner ausgefahrenen Position befindet.

Diese erfindungsgemäße Ausführung soll den Überrollbügel permanent in seiner ausgefahrenen Position halten, solange das Fahrzeug nicht mit einem Hartschalendach versehen ist. Das Ein- und Ausfahren des Überrollbügels kann dabei manuell oder automatisch ausgelöst werden.

Der Antriebs- und Riegelmechanismus betätigt den Überrollbügel 1, dessen sichtbarer Teile aus einem U-förmig gebogenen Bügelrohr 2 besteht, wobei die gebogene Basis nach oben weist und die beiden freien Schenkel durch das Rahmenblech 3 in die den Antriebs- und Riegelmechanismus aufnehmende Gehäusecassette 4 geführt sind. Die Gehäusecassette 4 ist mit einem Bodenblech 5 versehen, welches in den Bereichen unterhalb der Bügelschenkel durch Platten 6 und 7 verstärkt ist. An diesen Stellen sind am Bodenblech 5 die Standrohre 8 und 9 befestigt, welche die Innenführung für die Schenkel des Bügelrohres 2 bilden. Dazu verlaufen sie jeweils durch die geradlinigen Bereiche der Schenkel des Bügelrohres 2 im Innern der Gehäusecassette 4 bis über das Rahmenblech 3 aus dem Innern der Gehäusecassette 4 hinaus, wobei jeweils zwei Führungsbuchsen 10 und 11 bzw. 12 und 13 für den Toleranzausgleich zwischen dem Außenmantel der Standrohre 8 und 9 und dem Innenmantel der Schenkel des Bügelrohres 2 sorgen.

Die Führungsbuchsen 11 bis 13 sind so gestaltet, daß kreissegmentförmige, radial federnde Zungen an beiden axialen Enden der Führungsbuchsen angebracht sind und gegen die innere Mantelfläche der Schenkel des Bügelrohres 2 drücken. Die unteren Führungsbuchsen 11 und 13, welche also jeweils näher zum Bodenblech hin an den Standrohren 8 und 9 befestigt sind, befinden sich in einer Höhe, welche etwa dem Ende der Bügelschenkel entspricht, wenn der Überrollbügel 1 wie in der rechten Bildhälfte dargestellt ausgefahren ist. Die oberen Führungsbuchsen 10 und 12 sind in einer Höhe angeordnet, welche bei eingefahrenem Überrollbügel, wie in der linken Bildhälfte dargestellt, etwa dem Übergang zwischen gradliniger und gekrümmter Form des Bügelrohres 2 entspricht.

Innerhalb der Gehäusecassette 4 sind die Schenkel des Bügelrohres 2 über die Querstrebe 14 miteinander verbunden. Zur Befestigung der Querstrebe 14 an den Schenkeln des Bügelrohres 2 besitzt die Querstrebe 14 zwei kreisrunde Durchbrüche im Abstand der Bügelschenkel, wobei die Ränder der Durchbrüche hochgebogen sind und an den Mantelflächen der Bügelschenkel anliegen. Die hochgebogenen Ränder sind mit den Mantelflächen der Bügelschenkel verschweißt.

In der Mitte zwischen den Standrohren 8 und 9 verläuft parallel zu diesen die Gewindespindel 15. Sie ist auf dem Bodenblech 5 gelagert und wird von einem Elektromotor 16 angetrieben, welcher am Rahmenblech 3 befestigt ist. Die Querstrebe 14 steht nicht im Eingriff mit der Gewindespindel 15, sondern besitzt einen Durchbruch, welcher von der Gewindespindel 15 mit Spiel durchragt wird. Die Gewindespindel 15 treibt eine Gewindetraverse 17 an, welche unterhalb der Querstrebe 14 angeordnet ist. Durch übereinanderliegende Durchbrüche in der Gewindetraverse 17 und der Querstrebe 14 ist auf beiden Seiten der Gewindespindel 15 jeweils mit radialem Spiel ein Koppelbolzen 18 bzw. 19 geführt. Zur Herstellung einer Mitnehmerverbindung zwischen der Querstrebe 14 und der Gewindetraverse 17 sind die Koppelbolzen 18 und 19 an ihren oberen, die Querstrebe 14 durchragenden Ende mit einem verdickten Bolzenkopf 20 bzw. 21 versehen. An ihrem unteren Ende besitzen die Koppelbolzen 18 und 19 ein Gewinde, auf welches jeweils eine Justiermutter 22 bzw. 23 aufgeschraubt ist, welche nach Einstellung des gewünschten Leerweges zwischen Querstrebe 14 und Gewindetraverse 17 verdrehsicher mit den Koppelbolzen 18 bzw. 19 verstemmt ist. Zwischen der Querstrebe 14 und der Gewindetraverse 17 sind die Koppelbolzen 18 und 19 jeweils von einer Druckfeder 24 bzw. 25 umgeben, durch welche axiale Spielfreiheit zwischen der Querstrebe 14 und der Gewindetraverse 17 hergestellt wird. Die Federhärte der Druckfedern 24 und 25 ist so ausgelegt, daß - ausgehend von der linken Bildhälfte - bei Aufwärtsbewegung der Gewindetraverse 17 die Querstrebe 14 solange mitbewegt wird, bis sie mit dem Distanzring 26, welcher lose aufgelegt ist, am Rahmenblech 3 anschlägt. Das heißt, daß die Druckfedern 24 und 25 stark genug sind, um den Überrollbügel auszufahren und dabei die Reibkräfte zwischen den Führungsbuchsen 10 bis 13 und dem Bügelrohr 2 zu überwinden. Erst wenn der Distanzring 26 seinen Anschlag am Rahmenblech 3 erreicht hat, werden bei weiterer Aufwärtsbewegung der Gewindetraverse 17 die Druckfedern 24 und 25 komprimiert, bis die Gewindetraverse 17 mit dem Distanzstück 43 an der Querstrebe 14 anschlägt und stehenbleibt.

Die Gewindetraverse 17 weist an ihren beiden Enden, welche den Schenkeln des Bügelrohres 2 zugewandt sind, jeweils eine Laufrolle 27 bzw. 28 auf, deren Achsen sowohl senkrecht zur Querstrebe 14 als auch senkrecht zur Gewindespindel 19 verlaufen, also senkrecht zur Bildebene liegen. Diese Laufrollen 27 und 28 sind in jeweils einem Langloch 29 bzw. 30 geführt, welches in jeweils eine Sperrklinke 31 bzw. 32 eingestanzt ist. Die Sperrklinken 31 und 32 sind um jeweils ein Schwenklager 33 bzw. 34 schwenkbar, dessen Abstand zur Gewindespindel 15 zwischen dem der Laufrollen 27 und 28 und dem der Standrohre 8 und 9 liegt. Dabei sind die Schwenklager 33 und 34 jeweils in der Nähe des Bodenbleches 5 angeordnet. Die Langlöcher 29 und 30 bilden zusammen mit den Laufrollen 27 und 28 eine Kulissenführung für die Sperrklinken 31 bzw. 32. Bei eingefahrener Überrollbügelposition sind die Langlöcher 29 und 30 so angelegt, daß die Laufrollen 27 und 28 bei einer Aufwärtsbewegung zunächst einen geradlinigen, parallel zur Gewindespindel 15 verlaufenden Abschnitt durchfahren, dessen Länge dem Abstand der Querstrebe 14 in eingefahrener Position zum Anschlag am Rahmenblech 3 entspricht. In der Höhe der Laufrollen 27 und 28, bei welcher der Distanzring 26 am Rahmenblech 3 anschlägt, erreichen die Laufrollen 27 und 28 eine Biegung zur Gewindespindel 15 hin, so daß durch die geradlinige Aufwärtsbewegung der Laufrollen 27 und 28 die Sperrklinken 31 und 32 eine Schwenkbewegung von der Gewindespindel 15 weg vollführen.

Diese Schwenkbewegungen werden von jeweils einem federnden Element, hier als Blattfedern 35 und 36 dargestellt, unterstützt. Die Blattfedern 35 und 36, welche jeweils zwischen der Unterkante der Sperrklinke 31 bzw. 32 und dem Bodenblech 5 angeordnet sind, dienen hauptsächlich zur Vermeidung von Klappergeräuschen durch die Sperrklinken 31 und 32.

Die Sperrklinken 31 und 32 sind an ihren den Bügelschenkeln zugewandten Außenseiten mit jeweils einer stufigen Ausnehmung versehen, welche jeweils durch eine vertikale Anschlagkante 39 bzw. 40 und eine horizontale Sperrkante 41 bzw. 42 begrenzt sind und sich bei einer Schwenkbewegung nach außen an die Anschlaghülsen 37 bzw. 38 anlegen. Die Anschlaghülsen 37 und 38 sind aus hartem Metall gefertigt und auf die Enden der Bügelschenkel aufgeschoben. Die Schwenkbewegung der Sperrklinken 31 und 32 erfolgt soweit, daß die Anschlagkanten 39 und 40 an den Mantelflächen der Anschlaghülsen 37 bzw. 38 anliegen und die Sperrkanten 41 und 42 unter den Anschlaghülsen 37 bzw. 38 liegen. In dieser Position der Sperrklinken 31 und 32 bilden die Sperrkanten 41 und 42 eine axiale Sperre für eine Abwärtsbewegung der Anschlaghülsen 37 und 38, so daß der Überrollbügel 1 verriegelt ist. Da es in einem Crashfall zu einer enormen Flächenbelastung an den Sperrkanten 41 und 42 sowie an den Schwenklagern 33 und 34 kommen kann, sind die Sperrklinken 31 und 32, die Anschlaghülsen 37 und 38 sowie die Schwenklager 33 und 34 aus hochfestem Stahl angefertigt, der gegebenenfalls noch wärmebehandelt ist.

Eine Abwärtsbewegung der Gewindetraverse 17 - bedingt durch eine umgekehrte Drehung der Gewindespindel 15 - bewirkt zunächst eine Einwärtsschwenkung der Sperrklinken 31 und 32 und im weiteren Verlauf nach Überwindung des Leerweges zwischen Gewindetraverse 17 und Querstrebe 14 ein Einfahren des Überrollbügels 1.

### Bezugszeichenliste

- 1: Überrollbügel
- 2: Bügelrohr
- 3: Rahmenblech
- 4: Gehäusecassette
- 5: Bodenblech
- 6: Platte
- 7: Platte
- 8: Standrohr
- 9: Standrohr
- 10: Führungsbuchse
- 11: Führungsbuchse
- 12: Führungsbuchse
- 13: Führungsbuchse
- 14: Querstrebe
- 15: Gewindespindel
- 16: Elektromotor
- 17: Gewindetraverse
- 18: Koppelbolzen
- 19: Koppelbolzen
- 20: Bolzenkopf
- 21: Bolzenkopf
- 22: Justiermutter
- 23: Justiermutter
- 24: Druckfeder
- 25: Druckfeder
- 26: Distanzring
- 27: Laufrolle
- 28: Laufrolle
- 29: Langloch
- 30: Langloch
- 31: Sperrklinke
- 32: Sperrklinke
- 33: Schwenklager
- 34: Schwenklager
- 35: Blattfeder
- 36: Blattfeder
- 37: Anschlaghülse
- 38: Anschlaghülse
- 39: Anschlagkante
- 40: Anschlagkante
- 41: Sperrkante
- 42: Sperrkante
- 43: Distanzstück

## Patentansprüche

1. Geradlinig ausfahrbarer Überrollbügel (1) für Kraftfahrzeuge, mit Antriebs- und Riegelmechanismus, ausgestattet mit einem von einem Elektromotor (16) angetriebenen Gewindetrieb, dessen Achse eine Gewindetraverse (17) in Richtung der Ausfahrbewegung des Überrollbügels (1) bewegt, dadurch **gekennzeichnet,** daß die Gewindetraverse (17) mittels einer einen Leerweg aufweisende Mitnehmerverbindung, eine an das Bügelrohr (2) des Überrollbügels (1) fest gekoppelte Querstrebe 14 parallel zur Gewindespindel (15) des Gewindetriebs auf und ab bewegt und gleichzeitig den Riegelmechanismus in der ausgefahrenen Endposition des Bügelrohres (2) des Überrollbügels (1) sperrt und beim Einfahren des Bügelrohres (2) den Riegelmechanismus entsperrt.

2. Geradlinig ausfahrbarer Überrollbügel nach Anspruch 1, **dadurch gekennzeichnet,** daß die Sperrvorrichtung von mindesten einer schwenkbaren Sperrklinke (31, 32) gebildet ist, die eine auf einer Teilstrecke gebogene Führungsschiene (29, 30) aufweist, an welcher jeweils ein Fortsatz (27, 28) der Gewindetraverse (17) entlangläuft, so daß die Sperrklinke (31, 32) bei linearer Bewegung der Gewindetraverse (17) beim Durchfahren der Biegung der Führungsschiene (29, 30) eine Schwenkbewegung vollzieht.

3. Geradlinig ausfahrbarer überrollbügel nach Anspruch 1 oder 2, **dadurch gekennzeichnet,** daß mindestens eine Druckfeder (24, 25) zwischen Gewindetraverse (17) und Querstrebe (14) axiale Spielfreiheit herstellt.

4. Geradlinig ausfahrbarer Überrollbügel nach Anspruch 2 oder 3, **dadurch gekennzeichnet,** daß die Führungsschiene jeweils ein Langloch (29, 30) und der Fortsatz Jeweils eine Laufrolle (27, 28) ist.

5. Geradlinig ausfahrbarer Überrollbügel nach Anspruch 3 oder 4, **dadurch gekennzeichnet**, daß die ausgefahrene Position des Überrollbügels von einem die Ausfahrbewegung der Querstrebe (14) begrenzenden Anschlag (26, 3) definiert ist, nach dessen Erreichen die Querstrebe (14) stehenbleibt und die Gewindetraverse (17) den Leerweg unter Kompression der Druckfeder bzw. der Druckfedern (25, 26) durchfährt sowie mit ihrem Fortsatz bzw. ihren Fortsätzen (27, 28) jeweils die Biegung der zugehörigen Führungsschiene (29, 30) entlangläuft, so daß die jeweilige Sperrklinke (31, 32) mit einer radialen Sperrkante (41, 42) unter die Bügelenden des Überrollbügels (1) schwenkt und ein Eindrücken des Überrollbügels (1) in die eingefahrene Position verhindert.

## Claims

1. A rectilinearly extensible roll bar (1) for motor vehicles, having a driving and locking mechanism equipped with a threaded drive which is driven by a electric motor (16) and the shaft of which moves a threaded cross-bar (17) in the direction of the extension movement of the roll bar (1), characterised in that, by means of a driving connection having an idle travel, the threaded cross-bar (17) moves a crosspiece (14), which is rigidly coupled to the bar pipe (2) of the roll bar (1), up and down parallel to the threaded spindle (15) of the threaded drive and, at the same time, locks the locking mechanism in the extended end position of the bar pip (2) of the roll bar (1) and unlocks the locking mechanism when the bar pipe (2) is retracted.

2. A rectilinearly extensible roll bar according to claim 1, characterised in that the locking device is formed by at least one pivoted pawl (31, 32) having a guide rail (29, 30) that is curved for a portion of its length and along which a respective extension (27, 28) of the threaded cross-bar (17) runs, so that, as the threaded cross-bar (17) moves linearly, the pawl (31, 32) executes a pivoting movement as the curve of the guide rail (29, 30) is travelled.

3. A rectilinearly extensible roll bar according to claim 1 or claim 2, characterised in that at least one pressure spring (24, 25) produces zero axial backlash between threaded cross-bar (17) and crosspiece (14).

4. A rectilinearly extensible roll bar according to claim 2 or claim 3, characterised in that each guide rail is a slot (29, 30) and each extension is a roller (27, 28).

5. A rectilinearly extensible roll bar according to claim 3 or claim 4, characterised in that the extended position of the roll bar is defined by a stop (26, 3) that limits the extension movement of the crosspiece (14), after reaching which stop the crosspiece (14) remains stationary and the threaded cross-bar (17) carries out the idle travel while compressing the pressure spring(s) (25, 26) and runs by its extension(s) (27, 28) along the curve of the associated guide rail (29, 30), so that the respective pawl (31, 32) pivots under the bar ends of the roll bar (1) with a radial locking edge (41, 42) and prevents the roll bar (1) from being pushed into the retracted position.

## Revendications

1. Arceau de sécurité anti-tonneau (1) à mise en extension en ligne droite pour véhicules, comprenant un mécanisme d'entraînement et de verrouillage, équipé d'un mécanisme à vis, entraîné par un moteur électrique (16), et dont l'axe met une traverse filetée (17) en mouvement selon la direction du mouvement d'extension de l'arceau de sécurité anti-tonneau (1), caractérisé en ce que la traverse filetée (17) entraîne vers le haut et vers le bas, parallèlement à la vis (15) du mécanisme à vis, au moyen d'une liaison à poussoir présentant une course à vide, une entretoise transversale (14) accouplée rigidement au tube (2) de l'arceau de sécurité antitonneau (1) et, en même temps, bloque le mécanisme de verrouillage dans la position finale d'extension du tube (2) de l'arceau de sécurité anti-tonneau (1) et débloque le mécanisme de verrouillage lors de la rentrée du tube (2) de l'arceau.

2. Arceau de sécurité anti-tonneau pouvant être mis en extension en ligne droite, selon la revendication 1, caractérisé en ce que le mécanisme de blocage est formé d'au moins un cliquet de blocage pivotant (31, 32) qui présente un rail de guidage (29, 30) incurvé sur un trajet partiel, le long duquel circule un prolongement (27, 28) de la traverse filetée (17), de sorte que le cliquet de blocage (31,32) décrit un mouvement de pivotement au cours du déplacement linéaire de la traverse filetée (17) lorsqu'elle parcourt la courbe du rail de guidage (29, 30).

3. Arceau de sécurité anti-tonneau pouvant être mis en extension en ligne droite selon la revendication 1 ou 2, caractérisé en ce qu'au moins un ressort de compression (24, 25) établit une liberté de jeu axial entre la traverse filetée (17) et l'entretoise transversale (14).

4. Arceau de sécurité anti-tonneau pouvant être mis en extension en ligne droite selon la revendication 2 ou 3, caractérisé en ce que chaque rail de guidage présente un trou allongé (29, 30) et que chaque prolongement est un galet de roulement (27, 28).

5. Arceau de sécurité anti-tonneau pouvant être mis en extension en ligne droite selon la revendication 3 ou 4, caractérisé en ce que la position d'extension de l'arceau de sécurité est définie par une butée (26, 3) qui limite le mouvement d'extension de l'entretoise transversale (14), l' entretoise transversale (14) s'arrêtant après avoir atteint cette butée et la traverse filetée (17) parcourant alors la course à vide avec compression du ou des ressort(s) de compression (25, 26) et son ou ses prolongement(s) (27, 28) parcourant la courbe du rail de guidage correspondant (29, 30), de sorte que le cliquet de blocage correspondant (31, 32) place, en pivotant, un bord de blocage radial (41, 42) sous les extrémités de l' arceau de sécurité anti-tonneau (1), et empêche de repousser l'arceau de sécurité anti-tonneau (1) dans la position rétractée.
